# EUROPÄISCHE PATENTSCHRIFT

(11) **EP 2 026 095 B1**
(45) Veröffentlichungstag und Bekanntmachung des Hinweises auf die Patenterteilung: **08.12.2010**
(21) Anmeldenummer: 08104526.2
(22) Anmeldetag: 24.06.2008
(51) Int. Cl.: G01S 7/40, G01S 13/93

(54) **Verfahren und Vorrichtung zur Zustandserkennung eines an einem Kraftfahrzeug angeordneten Abstandssensors**
Method and device for recognising the state of a distance sensor attached to a motor vehicle
Procédé et dispositif de reconnaissance de l'état d'un capteur de distance agencé sur un véhicule automobile

(30) Priorität: 07.08.2007 DE 102007037213
(43) Veröffentlichungstag der Anmeldung: 18.02.2009
(73) Patentinhaber: ROBERT BOSCH GMBH, 70442 Stuttgart (DE)
(72) Erfinder: Garcia Bordes, Maria-Eugenia, Jung-Gu, Seoul 100-130 (KR)

(56) Entgegenhaltungen:
- WO-A-01/22113
- DE-A1- 19 948 252
- DE-A1- 19 963 001

## Beschreibung

Die Erfindung betrifft ein Verfahren und eine Vorrichtung zur Zustandserkennung eines an einem Kraftfahrzeug angeordneten Abstandssensors mit einem Prozessor und einem Speicher zur Abspeicherung von einem ersten Wert, der eine Anzahl aller von dem Abstandssensor während einer Messung detektierten Objekte repräsentiert und normiert ist, von einem zweiten Wert, der eine mittlere Leistung von dem Abstandssensor empfangenen Signalen repräsentiert und normiert ist und von dritten Werten, die eine Wahrscheinlichkeit für ein Vorhandensein von Objekten innerhalb eines Erfassungsbereiches des Abstandssensors repräsentieren, und einen Geschwindigkeitsregler, mittels dessen die Geschwindigkeit des Kraftfahrzeugs regelbar ist.

Abstandssensoren mit Geschwindigkeitsregler werden im Rahmen einer automatischen Geschwindigkeitsregelung eines Kraftfahrzeugs zur Erkennung vorausfahrender Kraftfahrzeuge eingesetzt. Die automatische Fahrgeschwindigkeitsregelung übernimmt die Geschwindigkeitsregelung des Kraftfahrzeugs derart, dass eine Soll-Geschwindigkeit eingeregelt wird, so lange die Umgebungsbedingungen dies zulassen. Die automatische Fahrgeschwindigkeitsregelung wird auch als adaptive Fahrgeschwindigkeitsregelung bezeichnet, die englische Übersetzung der adaptiven Fahrgeschwindigkeitsregelung lautet adaptive cruise control, abgekürzt ACC. Das ACC ist ein auf Radar oder Lidar basierendes Fahrerassistenzsystem, das automatisch einen geeigneten Abstand zum in einer eigenen Spur vorausfahrenden Kraftfahrzeug einhält. Dieses ausgewählte vorausfahrende Kraftfahrzeug wird als Ziel- oder Regelobjekt oder auch als Zielfahrzeug bezeichnet.

Der Abstandssensor ist unfähig, bei Blindheit vorausfahrende Kraftfahrzeuge sauber zu erkennen und zu verfolgen. Von daher ist eine vertrauenswürdige Erkennung dieser Blindheit und konsequenter Weise ein Abschalten des ACC unabdingbar. Um zu entscheiden, ob der Abstandssensor des ACC blind ist oder nicht, sind verschiedene Verfahren zur Erkennung der Blindheit bereits verwirklicht. Dies kann entweder auf Radarindikatoren oder auf eine Kombination von schlechten Wetterbedingungen und einer Verfolgungsleistung des vorausfahrenden Kraftfahrzeuges basieren.

Aus der DE 199 45 250 A1 sind solch ein Verfahren und solch eine Vorrichtung bekannt. Zumindest zwei Indikatoren werden gewichtet und derart verknüpft, dass eine Aussage über einen wahrscheinlichen Zustand des Sensors erfolgen kann. Die Indikatoren werden aus von dem Sensor empfangenen oder ausgesendeten Signalen gebildet. Ein erster möglicher Indikator ist die mittlere Winkelgüte aller von dem Abstandssensor detektierten Objekte. Die Winkelgüte kann beispielsweise aus dem Quotienten von realem Objektwinkel und der Differenz aus realem und gemessenem Objektwinkel bestimmt werden. Ein weiterer möglicher Indikator ist die Objektstabilität, die die Rate von Detektionsausfällen des für die Kraftfahrzeuglängsregelung ausgewählten Ziel- beziehungsweise Regelobjekts beschreibt. Ein weiterer Indikator ist die mittlere Leistung der von dem Sensor empfangenen Signale. Wird von einem Sensor viel Leistung empfangen, so kann diese beispielsweise von einzelnen starken oder auch von vielen schwachen Zielen herrühren. Ein weiterer möglicher Indikator ist die Summe aller von dem Abstandssensor während einer Messung detektierten Objekte. Genauere Angaben zur Auswertung und Nutzung dieser Indikatoren fehlen.

Aus Radar- beziehungsweise Lidar-Rohdaten werden Positionen und Geschwindigkeiten von erfassten Objekten berechnet und abgespeichert. Die Objekte werden in Abtastzyklen des Radars beziehungsweise Lidars erfasst. Das Erfassen des Objektes wird auch als Detektion bezeichnet. Die Objekte werden nicht in jedem Abtastzyklus detektiert. Für die erfassten Objekte werden Detektionsraten und Wahrscheinlichkeiten für das Vorhandensein der Objekte abgespeichert. Die Detektionsrate ist ein Verhältniswert, der sich aus einer Anzahl der Detektionen eines Objektes zu einer Anzahl der insgesamt durchgeführten Abtastzyklen ergibt. Die Wahrscheinlichkeit für das Vorhandensein eines Objektes wird auch als Objekt-Existenzwahrscheinlichkeit oder als Wahrscheinlichkeit über das Vorhandensein eines Objektes bezeichnet und ergibt sich aus einem Likelihood-Quotienten. Der Likelihood-Quotienten Test ist ein statistischer Test, der zu Hypothesentests in parametrischen Modellen in der Mathematik gehört. Der Likelihood-Quotient gibt das Verhältnis zweier geschätzter Wahrscheinlichkeiten wieder und ist eine mathematische Wahrscheinlichkeit, dass zu einer Objekt Hypothese ein reales Objekt vorhanden ist. Der Zähler des Quotienten ist mit einer geschätzten Wahrscheinlichkeit über das ankommende Signal besetzt, das unter der Hypothese gemessen ist, das ein reales Objekt vorhanden ist. Der Nenner ist mit einer weiteren geschätzten Wahrscheinlichkeit über das ankommende Signal besetzt, das unter der Hypothese gemessen ist, dass kein reales Objekt vorhanden ist. Diese Objekt-Existenzwahrscheinlichkeit ist als Datenwert im Speicher hinterlegt.

Der Erfindung liegt die Aufgabe zugrunde, ein einfaches Verfahren und eine einfache Vorrichtung zur Erkennung eines verschmutzten oder blinden Abstandssensors anzugeben.

Diese Aufgabe wird mit den Merkmalen der Hauptansprüche gelöst. Dabei sind folgende Verfahrensschritte angewandt: Aus dritten Werten, die eine Wahrscheinlichkeit für ein Vorhandensein von Objekten innerhalb eines vorgebbaren Erfassungsteilbereiches des Abstandssensors repräsentieren, wird ein Maximum ermittelt, wobei für jedes Objekt eine Objekt-Existenzwahrscheinlichkeit berechnet, jede Objekt-Existenzwahrscheinlichkeit auf 1 normiert, aus allen normierten Objekt-Existenzwahrscheinlichkeiten aller erfassten Objekte das Maximum ermittelt wird und wobei das Maximum asynchron so zeitgefiltert ist, dass die Existenzwahrscheinlichkeit schnell von 0 auf 1 steigt, aber langsam von 1 auf 0 sinkt, der erste Wert wird mit einem ersten vorgebbaren Schwellwert verglichen, der zweite Wert wird mit einem zweiten vorgebbaren Schwellwert verglichen, das asynchron zeitgefilterte Maximum wird mit einem dritten vorgebbaren Schwellwert verglichen und abhängig von den Vergleichen wird ein eine Blindheit anzeigendes Zustandsbit dann gesetzt, wenn der erste und der zweite normierte Wert oberhalb des ersten bzw. des zweiten Schwellwertes und das asynchron zeitgefilterte Maximum unterhalb des weidritten Schwellwertes liegen.

Für jedes Objekt wird eine Objekt-Existenzwahrscheinlichkeit berechnet. Die Objekt-Existenzwahrscheinlichkeit wird auf 1 normiert und der normierte Wert nachfolgend als Objekt-Existenzwahrscheinlichkeits-Indikator bezeichnet. Aus allen Objekt-Existenzwahrscheinlichkeits-Indikatoren aller erfassten Objekte wird das Maximum ermittelt. Das Maximum aller Objekt-Existenzwahrscheinlichkeits-Indikatoren ist ein vertrauenswürdiger Wert, um zu wissen, ob irgendwelche Objekte vom Abstandssensor gesehen werden oder nicht. Wann immer der Gegenverkehr, Verkehrszeichen, Leitplanken oder andere Fahrzeuge und Objekte erkannt werden, wird das Maximum aller Objekt-Existenzwahrscheinlichkeits-Indikatoren einen nahe zu 1 liegenden Wert haben. Liegt dieses Maximum nahe Null, so würde dies bedeuten, dass kein Verkehr und keine ortsfesten Objekte wie Leitpfosten oder Verkehrsschilder am Straßenrand vorhanden sind. In vorteilhafter Weise ist das Maximum asynchron zeitgefiltert. In einem bevölkerungs- und verkehrsarmen Land wie Schweden wird oftmals über eine längere Strecke oder eine längere Zeit kein Objekt ermittelt. Vereinzelt tauchen jedoch Verkehrsschilder am Straßenrand auf. Das Maximum ist daher so gefiltert, dass die Existenzwahrscheinlichkeit schnell von 0 auf 1 steigt, aber langsam von 1 auf 0 sinkt.

Der erste Wert, der eine Anzahl aller von dem Abstandssensor während einer Messung detektierten Objekte repräsentiert, und der zweite Wert, der eine mittlere Leistung von dem Sensor empfangenen Signale repräsentiert, sind ebenfalls normierte Werte. Der erste Wert, der zweite Wert und das Maximum sind Radar- oder Objektindikatoren. Die Wechselbeziehung dieser Indikatoren ist überwacht. Der erste Wert, der eine Anzahl aller von dem Abstandssensor während einer Messung detektierten Objekte repräsentiert, wird nachfolgend auch als Indikator über die Summe aller Detektionen oder abgekürzt als Indikator SumDet bezeichnet. Der zweite Wert, der eine mittlere Leistung von dem Sensor empfangenen Signale repräsentiert, wird nachfolgend auch als Indikator über eine mittlere Spitzenleistung oder abgekürzt als Indikator AverPeakPower bezeichnet. Der Indikator über das asynchron zeitgefilterte Maximum wird nachfolgend auch als ExistProbFilt Indikator bezeichnet.

Wenn eine optische Linse des Abstandssensors sauber ist, sind die Indikatoren SumDet und AverPeakPower proportional zu dem ExistProbFilt Indikator. Erhöhen sich die Indikatoren SumDet und AverPeakPower, wenn eine größere Anzahl von Objekten vorhanden ist, dann wird sich ExistProbFilt Indikator ebenso erhöhen. Verringern sich die Indikatoren SumDet und AverPeakPower, das heißt, es liegt eine Straße ohne Verkehr und ohne ortsfeste Objekte vor, wird sich der ExistProbFilt Indikator gleichermaßen verringern. Die ortsfesten Objekte werden auch als stehende Objekte bezeichnet.

Wenn jedoch die Linse teilweise von einer Eisschicht bedeckt ist, nehmen die Indikatoren AverPeakPower und SumDet höhere Werte an und der ExistProbFilt Indikator verringert sich, weil das Eis die Objekterkennung verringert. Wenn die Linse total von Eis bedeckt ist, wird sich die Differenz zwischen diesen Indikatoren erhöhen. Beide Indikatoren AverPeakPower und SumDet besitzen hohe Werte, allerdings ist der ExistProbFilt Indikator gleich Null, weil keine Objekte erkannt werden. Aufgrund dieses Phänomens der umgekehrten Proportionalität wird das eine Blindheit anzeigende Zustandsbit dann gesetzt, wenn die Indikatoren AverPeakPower und SumDet oberhalb vorgebbarer Grenzwerte und der ExistProbFilt Indikator unterhalb eines weiteren vorgebbaren Grenzwertes liegen. Die Grenzwerte werden auch als Schwellwerte oder Schwellen bezeichnet. Das eine Blindheit anzeigende Zustandsbit wird auch als Zustandsbit für die Blindheit oder als Blindheits-Zustandsbit bezeichnet. Es ist davon auszugehen, dass bei zumindest teilweise mit Eis bedeckter Linse Radarstrahlung in den Abstandssensor zurückgestrahlt wird, so dass die mittlere Leistung ansteigt und Pseudo Objekte gemessen werden. Der Schwellwert für den Indikator AverPeakPower liegt bei circa 0,9, der Schwellwert für den Indiatkor SumDet liegt bei circa 0,8 und der Schwellwert für den ExistProbFilt Indikator liegt bei circa 0,1.

Unter extrem schlechten Wetterbedingungen, das bedeutet niedrige Temperaturen und Schneefall, kann eine optische Linse des Abstandssensors zumindest teilweise mit einer Eisschicht bedeckt sein, obwohl eine Heizung der Linse aktiviert ist. Dieses Phänomen der zumindest teilweise mit einer Eisschicht bedeckten Linse führt zu einer verminderten Leistung des ACC, weil das verfolgte Objekt, das heißt, das vorausfahrende Kraftfahrzeug, in der eigenen Spur nicht sauber detektiert werden kann. In einem ersten Abtastzyklus wird das vorausfahrende Kraftfahrzeug erkannt und in einem darauf folgendem nicht mehr. Das bedeutet, dass das vorausfahrende Kraftfahrzeug zeitweise verloren geht oder überhaupt nicht mehr erkannt wird. Abhängig davon und des weiteren abhängig von der vorgegebenen und abgespeicherten Geschwindigkeit wird der Geschwindigkeitsregler das Kraftfahrzeug beschleunigen, solange das vorausfahrende Kraftfahrzeug nicht detektiert wird, und abgebremst, wenn es wieder erkannt wird. Dies ist ein offensichtlich ungewünschtes und unkomfortables Verhalten, das verhindert wird.

In vorteilhafter Weise ist in dem Speicher ein vierter Wert abgespeichert, der eine Zeitdauer ab ersten Vergleichen des ersten Wertes, des zweiten Wertes und des Maximums mit ersten drei vorgebbaren Schwellwerten repräsentiert. Der erste Wert, der zweite Wert und das Maximum werden zyklisch aktualisiert, die Vergleiche des ersten Wertes, des zweiten Wertes und des Maximums mit den ersten drei vorgebbaren Schwellwerten werden zyklisch wiederholt, der vierte Wert, der eine Zeitdauer ab den ersten Vergleichen des ersten Wertes, des zweiten Wertes und des Maximums mit den ersten drei vorgebbaren Schwellwerten repräsentiert, wird abhängig der ersten Vergleiche und nachfolgender Vergleiche des ersten Wertes, des zweiten Wertes und des Maximums mit den ersten drei vorgebbaren Schwellwerten zyklisch erhöht, der zyklisch erhöhte vierte Wert, der eine Zeitdauer ab den ersten Vergleichen des ersten Wertes, des zweiten Wertes und des Maximums mit den ersten drei vorgebbaren Schwellwerten repräsentiert, wird mit einem vierten vorgebbaren Schwellwert verglichen und abhängig von dem Vergleich des zyklisch erhöhten vierten Wertes mit dem vierten vorgebbaren Schwellwert wird ein eine Blindheit anzeigendes Zustandsbit gesetzt. Der vierte Wert wird zyklisch inkrementiert und repräsentiert eine Zeitdauer ab den ältesten Vergleichen des ersten Wertes, des zweiten Wertes und des Maximums mit den ersten drei vorgebbaren Schwellwerten. Damit ist eine vorgebbare Zeitdauer berücksichtigt, innerhalb derer der Zustand der umgekehrten Proportionalität andauert, ehe das eine Blindheit anzeigende Zustandsbit gesetzt wird. Der Schwellwert hierfür liegt bei circa 120 Sekunden.

In vorteilhafter Weise wird abhängig von einer eingeschalteten Linsenheizung das eine Blindheit anzeigende Zustandsbit gesetzt. Die Linsenheizung wird bei niedrigen Temperaturen, also bei Temperaturen um den Gefrierpunkt herum, eingeschaltet. Insbesondere wird die Linsenheizung bei + 5 Grad Celsius eingeschaltet.

Das Phänomen der umgekehrten Proportionalität tritt insbesondere dann auf, wenn die Linsenheizung an ist. Das Zustandsbit wird also dann gesetzt, wenn die Indikatoren AverPeakPower und SumDet oberhalb eines Grenzwertes und der ExistProbFilt Indikator unterhalb eines anderen Grenzwertes liegen, und die Linsenheizung an ist.

In vorteilhafter Weise wird abhängig von einer Geschwindigkeit des vom Abstandssensor geregelten Kraftfahrzeuges das eine Blindheit anzeigende Zustandsbit gesetzt. Damit sind Schmutzeffekte verhindert, die bei Unterschreiten eines vorgebbaren Geschwindigkeitsschwellwertes auftreten. Der Schwellwert liegt bei circa 50 Stundenkilometern.

In vorteilhafter Weise liegt der vorgebbare Erfassungsteilbereich in einem Abstand zwischen 60 und 300 Metern, in vorteilhafter Weise zwischen 80 und 250 Metern, insbesondere in einem Abstand von 100 und 200 Metern zum Kraftfahrzeug, das vom Abstandssensor geregelt ist. Damit ist berücksichtigt, dass Schmutzeffekte aufgrund von Strassenreflektionen, die bis zu einem Abstand von 60 Metern auftreten, unberücksichtigt bleiben.

In vorteilhafter Weise wird abhängig von dem Zustandsbit eine Anzeigeeinrichtung geschaltet. Dies kann in einfacher Weise ein Signalgeber sein, der ein akustisches Warnsignal für den Kraftfahrzeugführer ertönen lässt. Zusätzlich oder in einer alternativen Ausführungsform ist die Anzeigeeinrichtung als optische Anzeigeeinrichtung ausgeführt, auf der ein optisches Signal für den Kraftfahrzeugführer dargestellt wird.

In vorteilhafter Weise wird abhängig von dem Zustandsbit der Geschwindigkeitsregler und zusätzlich die Anzeigeeinrichtung geschaltet. Damit ist sichergestellt, dass der Kraftfahrzeugführer bei zumindest teilweise überfrorener Linse die alleinige Verantwortung für das Kraftfahrzeug wieder zu übernehmen hat.

In vorteilhafter Weise wird der erste Wert mit dem ersten vorgebbaren Schwellwert, der zweite Wert mit dem zweiten vorgebbaren Schwellwert, das Maximum mit einem fünften vorgebbaren Schwellwert verglichen und abhängig von den Vergleichen des ersten Wertes mit dem ersten vorgebbaren Schwellwert, des zweiten Wertes mit dem zweiten vorgebbaren Schwellwert und des Maximums mit dem fünften vorgebbaren Schwellwert wird das eine Blindheit anzeigende Zustandsbit zurückgesetzt. Die Rücksetzschwellwerte für die Indikatoren SumDet und AverPeakPower sind identisch der Schwellwerte zum Setzen des eine Blindheit anzeigende Zustandsbits. Der Schwellwert für den Indikator AverPeakPower liegt also bei circa 0,9, der Schwellwert für den Indiatkor SumDet also bei circa 0,8. Der Rücksetzschwellwert für ExistProbFilt Indikator liegt bei circa 0,5. Das Blindheits-Zustandsbit wird erst dann zurückgesetzt werden, wenn die Korrelation der Indikatoren SumDet und AverPeakPower zusammen mit ExistProbFilt Indikator wieder korrekt ist, das bedeutet, es ist positiv proportional. Dieses Zurücksetzen ist unabhängig von der Linsenheizung.

In vorteilhafter Weise ist in dem Speicher ein fünfter Wert abgespeichert, der eine Zeitdauer ab ersten Vergleichen des ersten Wertes mit dem ersten vorgebbaren Schwellwert, des zweiten Wertes mit dem zweiten vorgebbaren Schwellwert und des Maximums mit dem fünften vorgebbaren Schwellwert repräsentiert. Der erste Wert, der zweite Wert und das Maximum werden zyklisch aktualisiert, die Vergleiche des ersten Wertes mit dem ersten vorgebbaren Schwellwert, des zweiten Wertes mit dem zweiten vorgebbaren Schwellwert und des Maximums mit dem fünften vorgebbaren Schwellwert werden zyklisch wiederholt, der fünfte Wert, der eine Zeitdauer ab den ersten Vergleichen des ersten Wertes mit dem ersten vorgebbaren Schwellwert, des zweiten Wertes mit dem zweiten vorgebbaren Schwellwert und des Maximums mit dem fünften vorgebbaren Schwellwert repräsentiert, wird abhängig der ersten Vergleiche und nachfolgender Vergleiche des ersten Wertes mit dem ersten vorgebbaren Schwellwert, des zweiten Wertes mit dem zweiten vorgebbaren Schwellwert und des Maximums mit dem fünften vorgebbaren Schwellwert zyklisch erhöht, der zyklisch erhöhte fünfte Wert, der eine Zeitdauer ab den ersten Vergleichen des ersten Wertes mit dem ersten vorgebbaren Schwellwert, des zweiten Wertes mit dem zweiten vorgebbaren Schwellwert und des Maximums mit dem fünften vorgebbaren Schwellwert repräsentiert, wird mit einem sechsten vorgebbaren Schwellwert verglichen und abhängig von dem Vergleich des zyklisch erhöhten fünften Wertes mit dem sechsten vorgebbaren Schwellwert wird das eine Blindheit anzeigende Zustandsbit zurückgesetzt. Der fünfte Wert wird zyklisch inkrementiert und repräsentiert eine Zeitdauer ab den ältesten Vergleichen des ersten Wertes mit dem ersten vorgebbaren Schwellwert, des zweiten Wertes mit dem zweiten vorgebbaren Schwellwert und des Maximums mit dem fünften vorgebbaren Schwellwert. Damit ist eine vorgebbare Zeitdauer berücksichtigt, innerhalb derer der Zustand der Proportionalität andauert, ehe das eine Blindheit anzeigende Zustandsbit zurückgesetzt wird. Der Schwellwert hierfür liegt bei circa 60 Sekunden.

In vorteilhafter Weise wird abhängig von einem ermittelten Regelobjekt das eine Blindheit anzeigende Zustandsbit zurückgesetzt. In vorteilhafter Weise ist ein sechster Wert inkrementierbar. Der sechste Wert repräsentiert eine Zeitdauer innerhalb derer das Zielobjekt immer wieder ermittelt wird, ehe das eine Blindheit anzeigende Zustandsbit aufgrund der Zielobjektermittlung zurückgesetzt wird. Der inkrementierte sechste Wert ist mit einem siebten vorgebbaren Schwellwert vergleichbar. Der siebte Schwellwert liegt bei circa 5 Sekunden.

Die Schwellwerte sind in vorteilhafter Weise vorgebbar, so dass Eigenschaften des Kraftfahrzeugs, des Abstandssensors und des Kraftfahrzeugführers berücksichtigt werden können.

Zum besseren Verständnis der Erfindung ist nachfolgend ein Ausführungsbeispiel anhand der Zeichnung näher erläutert.

Es zeigen
- Fig. 1: einen Abstandsensor mit einer Eisschicht in Schnittdarstellung,
- Fig. 2: den Abstandssensor mit der Eisschicht in Draufsicht,
- Fig. 3: ein Kraftfahrzeug mit dem vereisten Abstandssensor, der ein vorausfahrendes Kraftfahrzeug als Zielobjekt erfasst hat und auf Grund eines verringerten Erfassungsbereiches des Öfteren verliert, in Draufsicht,
- Fig. 4: ein Flussdiagramm mit drei Programmteilen,
- Fig. 5: das Flussdiagramm mit dem ersten Programmteil in ausführlicher Darstellung,
- Fig. 6: das Flussdiagramm mit dem zweiten Programmteil in ausführlicher Darstellung und
- Fig. 7: das Flussdiagramm mit dem dritten Programmteil in ausführlicher Darstellung.

In den verschiedenen Figuren sind ähnliche oder dieselben Elemente durch gleiche Bezugszeichen bezeichnet.

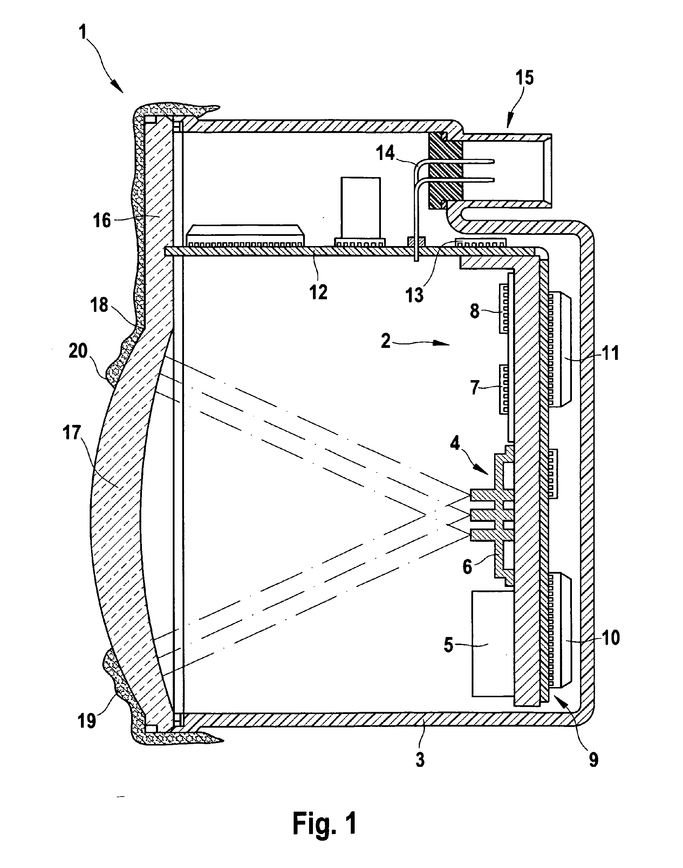

Figur 1 zeigt einen Abstandssensor 1 mit einer Vorrichtung 2 und einem Gehäuse 3. Die Vorrichtung 2 weist eine Radar-Sende-Empfangseinheit 4 mit einem Oszillatorblock 5, eine Strahlquelle 6 und weitere elektronische Bauteile 7 und 8, eine erste Leiterplatte 9 mit zumindest einem ersten Prozessor 10 und einem ersten Speicher 11 und eine zweite Leiterplatte 12 mit einem zweiten Prozessor 13 mit zumindest einem zweiten Speicher auf. In dem ersten Prozessor 10 werden Positionen und Geschwindigkeiten von erfassten Objekten berechnet und in dem Speicher 11 abgespeichert. Der zweite Prozessor 13 mit dem zweiten Speicher fungiert als Geschwindigkeitsregler. Von der zweiten Leiterplatte 12 führen elektrisch leitfähige Verbindungen 14 zu einer Steckverbindung 15. Das Gehäuse 3 weist eine Abdeckung 16 mit einer Linse 17 auf. Die Linse 17 weist einen Linsenrand 18 auf. Die Abdeckung 16 ist mit einer Eisschicht 19 bedeckt. Die Eisschicht 19 weist einen Eisschichtrand 20 auf.

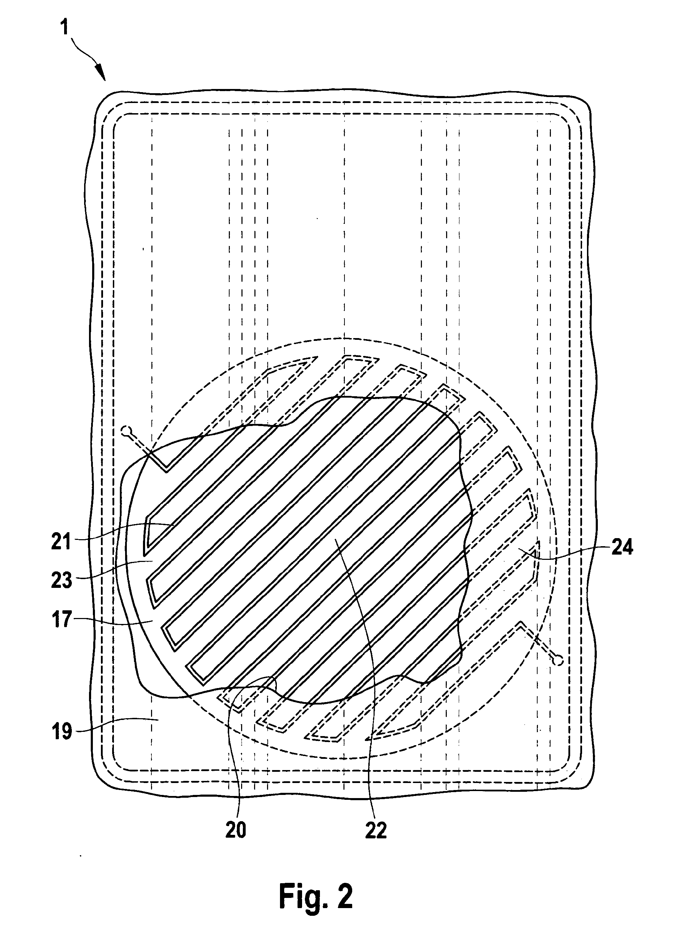

Figur 2 zeigt den mit der Eisschicht 19 bedeckten Abstandssensor 1. Die Linse 17 der Abdeckung 16 weist einen Heizdraht 21 als Linsenheizung auf. Die Abdeckung 16 ist von der Eisschicht 19 überzogen, die in einem Bereich 22 der Linse 17 eine etwa kreisförmige Ausnehmung aufweißt. Die Ausnehmung ist von dem Eisschichtrand 20 begrenzt. Eine rechte Linsenhälfte 23 bleibt weitestgehend eisfrei. Eine linke Linsenhälfte 24 ist von der Eisschicht 19 teilweise bedeckt.

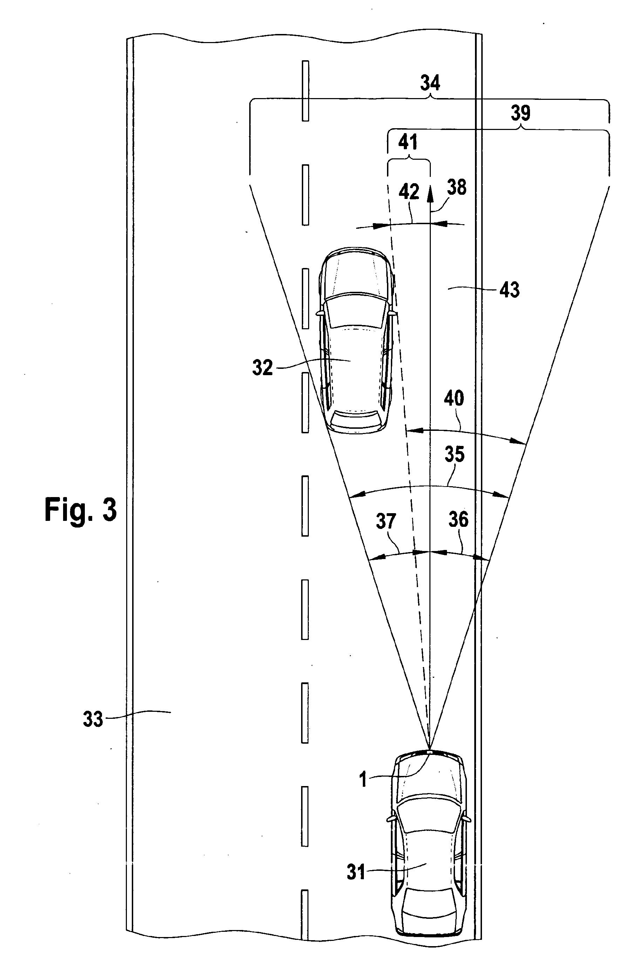

Figur 3 zeigt ein Kraftfahrzeug 31 mit dem Abstandssensor 1 auf einer Straße 33. Der Abstandssensor 1 des Kraftfahrzeuges 31 hat ein vorausfahrendes Fahrzeug 32 als Regelobjekt erfasst und das Kraftfahrzeug 31 befindet sich in Verfolgungsfahrt. Der Abstandssensor 1 sendet Strahlen aus, die sich parallel einer Fahrbahnebene der Straße 33 ausbreiten und von dem Regelobjekt 32 in den Abstandssensor 1 reflektiert werden. Ein Erfassungsbereich 34 des sauberen Sensors 1 weist einen maximalen Öffnungswinkel 35 von insgesamt 16 Grad auf, das sind ein Halbwinkel 36 von 8 Grad nach rechts und ein Halbwinkel 37 von 8 Grad nach links gemessen bezüglich einer Fahrtrichtung 38. Ein verringerter Erfassungsbereich 39 des mit einer Eisschicht 19 auf der Linsenhälfte 24 bedeckten Sensors 1 weist einen verringerten Öffnungswinkel 40 von insgesamt 11 Grad auf. In einem linken Teil 41 des Erfassungsbereiches 39 ergibt sich ein verringerter Halbwinkel 42 von 3 Grad. Ist der Abstandssensor 1 von der Eisschicht 19 bedeckt, breiten sich die Strahlen unter dem verringertem Erfassungsbereich 39 aus. Fährt das Kraftfahrzeug 31 auf einer Fahrbahnhälfte 43 der Straße 33 weit rechts und das Regelobjekt 32 weit links auf derselben Fahrbahnhälfte 43, so kommt es aufgrund der teilweise bedeckten Linsenhälfte 24 immer wieder zu sprunghaften Zielobjektverlusten.

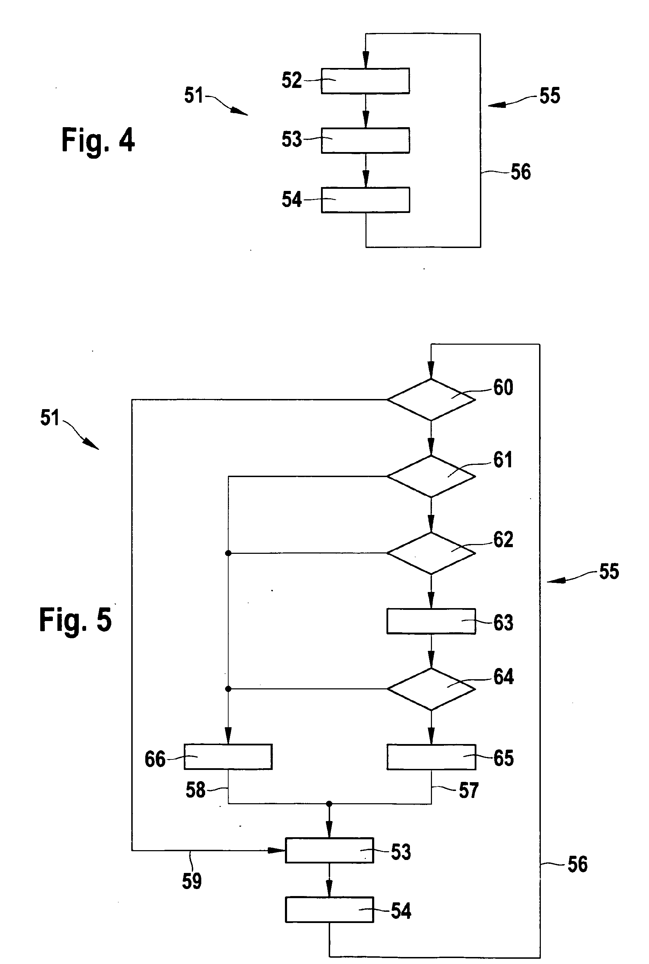

Fig. 4 zeigt ein Flussdiagramm 51 mit drei Programmteilen 52, 53 und 54 innerhalb einer zyklischen Schleife 55. Der erste Programmteil 52 zeigt das Setzen des die Blindheit anzeigenden Zustandsbits, der zweite Programmteil 53 zeigt das Zurücksetzen des die Blindheit anzeigenden Zustandsbits aufgrund der Indikatoren und der dritte Programmteil 54 zeigt das Zurücksetzen des die Blindheit anzeigenden Zustandsbits aufgrund eines ermittelten Zielobjektes. Die zyklische Schleife 55 weist einen Rückführzweig 56 auf.

Fig. 5 zeigt das Flussdiagramm 51 mit der zyklischen Schleife 55 und drei parallelen Zweigen 57, 58 und 59. Ein erster paralleler Zweig 57 des ersten Programmteiles 52 weist vier Verzweigungsschritte 60, 61, 62 und 64 und zwei Operationsschritte 63 und 65 auf. In dem ersten Verzweigungsschritt 60 wird abgefragt, ob die Umgebungstemperatur kleiner einer vorgebbaren Temperaturschwelle liegt, das bedeutet, es wird abgefragt, ob die Linsenheizung eingeschaltet ist. Ist dies der Fall, so wird auf den zweiten Verzweigungsschritt 61 geführt. In dem zweiten Verzweigungsschritt 61 wird abgefragt, ob der Indikator SumDet größer eines ersten vorgebbaren Schwellwertes, ob der Indikator AverPeakPower größer eines zweiten vorgebbaren Schwellwertes und ob das Maximum unterhalb eines vorgebbaren dritten Schwellwertes liegt. Ist dies der Fall, so wird auf den dritten Verzweigungsschritt 62 geführt. In dem dritten Verzweigungsschritt 62 wird abgefragt, ob die Geschwindigkeit des von dem Abstandssensor 1 geregelten Kraftfahrzeugs 31 größer einer vorgebbaren Geschwindigkeitsschwelle liegt. Ist dies der Fall, so wird auf den ersten Operationsschritt 63 geführt. In dem ersten Operationsschritt 63 wird ein vierter Wert abhängig der vorhergehenden ersten Vergleiche erhöht. Die ersten Vergleiche sind die Vergleiche des ersten Wertes, des zweiten Wertes und des Maximums mit den ersten vorgebbaren Schwellwerten und des Vergleichs der Geschwindigkeit des von dem Abstandssensor 1 geregelten Kraftfahrzeugs 31 mit einer Geschwindigkeitsschwelle. Der vierte Wert repräsentiert eine Zeitdauer ab diesen ersten vier Vergleichen, also ab den ältesten vier Vergleichen. Die Zeitdauer wird inkrementiert. Danach wird auf den vierten Verzweigungsschritt 64 geführt. In dem vierten Verzweigungsschritt 64 wird abgefragt, ob der vierte Wert, der eine Zeitdauer ab den ersten Vergleichen des ersten Wertes, des zweiten Wertes und des Maximums mit den ersten vorgebbaren Schwellwerten sowie der Geschwindigkeit des von dem Abstandssensor 1 geregelten Kraftfahrzeugs 31 mit der vorgebbaren Geschwindigkeitsschwelle repräsentiert, größer eines vierten vorgebbaren Schwellwertes liegt und ob das eine Blindheit anzeigende Zustandsbit zurückgesetzt ist. Ist dies der Fall, so wird auf den zweiten Operationsschritt 65 geführt und in dem zweiten Operationsschritt 65 das eine Blindheit anzeigende Zustandsbit gesetzt.

Ist eine der Bedingungen in dem zweiten Verzweigungsschritt 61, in dem dritten Verzweigungsschritt 62 oder in dem vierten Verzweigungsschritt 64 nicht erfüllt, so wird auf einen dritten Operationsschritt 66 des zweiten parallelen Zweiges 58 des ersten Programmteiles 52 geführt und der vierte Wert, der eine Zeitdauer ab den ersten Vergleichen des ersten Wertes, des zweiten Wertes und des Maximums mit den ersten vorgebbaren Schwellwerten sowie der Geschwindigkeit des von dem Abstandssensor 1 geregelten Kraftfahrzeugs 31 mit der vorgebbaren Geschwindigkeitsschwelle repräsentiert, auf Null gesetzt. Von den zweitem und dem dritten Operationsschritt 65 und 66 wird auf den zweiten Programmteil 53 geführt. Von dem zweiten Programmteil 53 wird auf den dritten Programmteil 54 und von dort aus über die Rückführschleife 56 das Programm mit dem ersten Verzweigungsschritt 60 gestartet.

Wird in dem ersten Verzweigungsschritt 60 festgestellt, dass die Umgebungstemperatur, auch als Außentemperatur bezeichnet, größer einer Temperaturschwelle liegt, wird über den dritten parallelen Zweig 59 des ersten Programmteiles 52 ebenfalls auf den zweiten Programmteil 53 geführt.

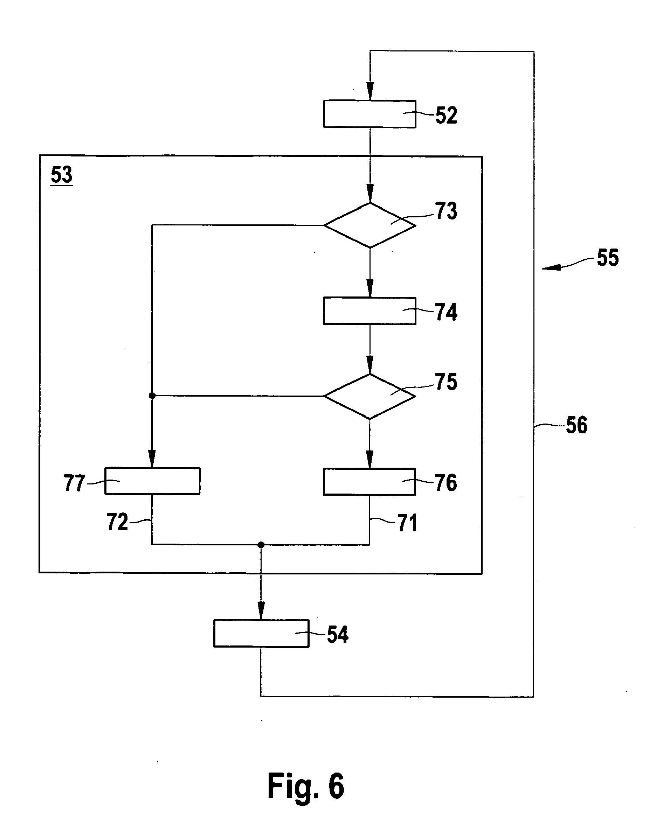

Fig. 6 zeigt in dem zweiten Programmteil 53 zwei weitere parallele Zweige 71 und 72. Der erste parallele Zweig 71 des zweiten Programmteiles 53 weist zwei Verzweigungsschritte 73 und 75 und zwei Operationsschritte 74 und 76 auf. In dem ersten Verzweigungsschritt 73 des zweiten Programmteiles 53 wird abgefragt, ob der Indikator SumDet größer des ersten vorgebbaren Schwellwertes, ob der Indikator AverPeakPower größer des zweiten vorgebbaren Schwellwertes und ob das Maximum oberhalb eines vorgebbaren fünften Schwellwertes liegt. Ist dies der Fall, so wird auf den ersten Operationsschritt 74 des zweiten Programmteiles 53 geführt. In dem ersten Operationsschritt 74 des zweiten Programmteiles 53 wird ein fünfter Wert abhängig der vorhergehenden Vergleiche erhöht. Diese Vergleiche sind die Vergleiche des ersten Wertes, des zweiten Wertes und des Maximums mit dem ersten, dem zweiten und dem fünften vorgebbaren Schwellwert. Der fünfte Wert repräsentiert eine Rücksetz-Zeitdauer, die inkrementiert wird. Danach wird auf den zweiten Verzweigungsschritt 75 des zweiten Programmteiles 53 geführt und abgefragt, ob die inkrementierte Rücksetz-Zeitdauer größer eines sechsten vorgebbaren Schwellwertes ist und ob das eine Blindheit anzeigende Zustandsbit gesetzt ist. Ist dies der Fall, so wird auf den zweiten Operationsschritt 76 des zweiten Programmteiles 53 geführt. In dem zweiten Operationsschritt 76 des zweiten Programmteiles 53 wird das eine Blindheit anzeigende Zustandsbit zurückgesetzt. Der zweite parallele Zweig 72 des zweiten Programmteiles 53 weist einen dritten Operationsschritt 77 auf. In dem dritten Operationsschritt 77 des zweiten Programmteiles 53 wird die Rücksetz-Zeitdauer zu Null gesetzt. Ist in dem ersten Verzweigungsschritt 73 des zweiten Programmteiles 53 eine der Bedingungen nicht erfüllt, so wird auf den dritten Operationsschritt 77 des zweiten Programmteiles 53 geführt und die Rücksetz-Zeitdauer auf Null gesetzt. Ist in dem zweiten Verzweigungsschritt 75 des zweiten Programmteiles 53 eine der Bedingungen nicht erfüllt, so wird auf den dritten Operationsschritt 77 des zweiten Programmteiles 53 geführt. Von dem zweiten Operationsschritt 76 und dem dritten Operationsschritt 77 des zweiten Programmteiles 53 wird zu dem dritten Programmteil 54 geführt.

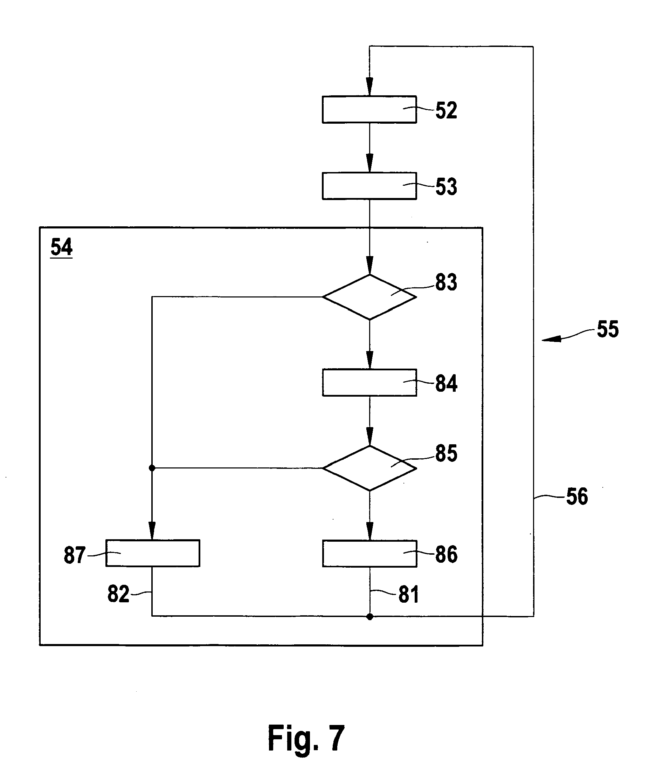

Fig. 7 zeigt in dem dritten Programmteil 54 weitere parallele Zweige 81 und 82. Der erste parallele Zweig 81 des dritten Programmteiles 54 weist zwei Verzweigungsschritte 83 und 85 und zwei Operationsschritte 84 und 86 auf. In dem ersten Verzweigungsschritt 83 des dritten Programmteiles 54 wird abgefragt, ob ein Zielobjekt ermittelt ist. Ist dies der Fall, so wird auf den ersten Operationsschritt 84 des dritten Programmteiles 54 geführt. In dem ersten Operationsschritt 84 des dritten Programmteiles 54 wird ein sechster Wert abhängig der Zielobjekt-Ermittlung erhöht. Der sechste Wert repräsentiert eine Rücksetz-Zeitdauer, die inkrementiert wird. Danach wird auf den zweiten Verzweigungsschritt 85 des dritten Programmteiles 54 geführt und abgefragt, ob die inkrementierte Rücksetz-Zeitdauer größer eines siebten vorgebbaren Schwellwertes ist und ob das eine Blindheit anzeigende Zustandsbit gesetzt ist. Ist dies der Fall, so wird auf den zweiten Operationsschritt 86 des dritten Programmteiles 54 geführt. In dem zweiten Operationsschritt 86 des dritten Programmteiles 54 wird das eine Blindheit anzeigende Zustandsbit zurückgesetzt. Der zweite parallele Zweig 82 des dritten Programmteiles 54 weist einen dritten Operationsschritt 87 auf. In dem dritten Operationsschritt 87 des dritten Programmteiles 54 wird die Rücksetz-Zeitdauer zu Null gesetzt. Ist in dem ersten Verzweigungsschritt 83 des dritten Programmteiles 54 eine der Bedingungen nicht erfüllt, so wird auf den dritten Operationsschritt 87 des dritten Programmteiles 54 geführt und die Rücksetz-Zeitdauer auf Null gesetzt. Ist in dem zweiten Verzweigungsschritt 85 des dritten Programmteiles 54 eine der Bedingungen nicht erfüllt, so wird auf den dritten Operationsschritt 87 des dritten Programmteiles 54 geführt. Von dem zweiten Operationsschritt 86 und dem dritten Operationsschritt 87 des dritten Programmteiles 54 wird zu dem ersten Programmteil 52 geführt.

## Patentansprüche

1. Verfahren zur Zustandserkennung eines an einem Kraftfahrzeug (31) angeordneten Abstandssensors (1) mit einem Prozessor (10) und einem Speicher (11) zur Abspeicherung von einem ersten Wert, der eine Anzahl aller von dem Abstandssensor (1) während einer Messung detektierten Objekte (32) repräsentiert und normiert ist, von einem zweiten Wert, der eine mittlere Leistung von dem Abstandssensor (1) empfangenen Signalen repräsentiert und normiert ist und von dritten Werten, die eine Wahrscheinlichkeit für ein Vorhandensein von Objekten (32) innerhalb eines Erfassungsbereiches (34) des Abstandssensors (1) repräsentieren, und einen Geschwindigkeitsregler (13), mittels dessen die Geschwindigkeit des Kraftfahrzeugs (31) regelbar ist, mit folgenden Verfahrensschritten:
- aus den dritten Werten, die eine Wahrscheinlichkeit für ein Vorhandensein von Objekten (32) innerhalb eines vorgebbaren Erfassungsteilbereiches (39) des Abstandssensors (1) repräsentieren, wird ein Maximum ermittelt, wobei für jedes Objekt (32) eine Objekt-Existenzwahrscheinlichkeit berechnet, jede Objekt-Existenzwahrscheinlichkeit auf 1 normiert, aus allen normierten Objekt-Existenzwahrscheinlichkeiten aller erfassten Objekte (32) das Maximum ermittelt wird und wobei das Maximum asynchron so zeitgefiltert ist, dass die Existenzwahrscheinlichkeit schnell von 0 auf 1 steigt, aber langsam von 1 auf 0 sinkt,
- der erste Wert wird mit einem ersten vorgebbaren Schwellwert verglichen,
- der zweite Wert wird mit einem zweiten vorgebbaren Schwellwert verglichen,
- das asynchron zeitgefilterte Maximum wird mit einem dritten vorgebbaren Schwellwert verglichen und
- abhängig von den Vergleichen wird ein eine Blindheit anzeigendes Zustandsbit dann gesetzt, wenn der erste und der zweite normierte Wert oberhalb des ersten bzw. des zweiten Schwellwertes und das asynchron zeitgefilterte Maximum unterhalb des dritten Schwellwertes liegen.

2. Verfahren zur Zustandserkennung eines an einem Kraftfahrzeug (31) angeordneten Abstandssensors (1) mit einem Prozessor (10) und einem Speicher (11) zur Abspeicherung von einem vierten Wert, der eine Zeitdauer ab ersten Vergleichen des ersten Wertes, des zweiten Wertes und des Maximums mit ersten drei vorgebbaren Schwellwerten repräsentiert, nach Anspruch 1, mit folgenden weiteren Verfahrensschritten:
- der erste Wert, der zweite Wert und das Maximum werden zyklisch aktualisiert,
- die Vergleiche des ersten Wertes, des zweiten Wertes und des Maximums mit den ersten drei vorgebbaren Schwellwerten werden zyklisch wiederholt,
- der vierte Wert, der eine Zeitdauer ab den ersten Vergleichen des ersten Wertes, des zweiten Wertes und des Maximums mit den ersten drei vorgebbaren Schwellwerten repräsentiert, wird abhängig der ersten Vergleiche und nachfolgender Vergleiche des ersten Wertes, des zweiten Wertes und des Maximums mit den ersten drei vorgebbaren Schwellwerten zyklisch erhöht,
- der zyklisch erhöhte vierte Wert, der eine Zeitdauer ab den ersten Vergleichen des ersten Wertes, des zweiten Wertes und des Maximums mit den ersten drei vorgebbaren Schwellwerten repräsentiert, wird mit einem vierten vorgebbaren Schwellwert verglichen und
- abhängig von dem Vergleich des zyklisch erhöhten vierten Wertes mit dem vierten vorgebbaren Schwellwert wird ein eine Blindheit anzeigendes Zustandsbit gesetzt.

3. Verfahren nach Anspruch 1 und/oder 2, **gekennzeichnet durch** folgenden Verfahrensschritt:
- zusätzlich abhängig von einer eingeschalteten Linsenheizung (21) wird das eine Blindheit anzeigende Zustandsbit gesetzt.

4. Verfahren nach Anspruch 1, 2 und/oder 3, **gekennzeichnet durch** folgenden Verfahrensschritt:
- zusätzlich abhängig von einer Geschwindigkeit des Kraftfahrzeuges (31) wird das eine Blindheit anzeigende Zustandsbit gesetzt.

5. Verfahren nach Anspruch 1, **dadurch gekennzeichnet, dass** der vorgebbare Erfassungsteilbereich (39) in einem Abstand zwischen 60 und 300 Metern, in vorteilhafter Weise zwischen 80 und 250 Metern, insbesondere in einem Abstand von 100 und 200 Metern zum geregelten Kraftfahrzeug liegt.

6. Verfahren nach einem oder mehreren der vorhergehenden Ansprüche 1 - 5, **gekennzeichnet durch** folgenden Verfahrensschritt:
- abhängig von dem eine Blindheit anzeigenden Zustandsbit wird eine Anzeigeeinrichtung geschaltet.

7. Verfahren nach einem oder mehreren der vorhergehenden Ansprüche 1 - 6, **gekennzeichnet durch** folgenden Verfahrensschritt:
- abhängig von dem eine Blindheit anzeigenden Zustandsbit wird der Geschwindigkeitsregler (13) geschaltet.

8. Verfahren nach einem oder mehreren der vorhergehenden Ansprüche 1 - 7, mit folgenden Verfahrensschritten:
- der erste Wert wird mit dem ersten vorgebbaren Schwellwert verglichen,
- der zweite Wert wird mit dem zweiten vorgebbaren Schwellwert verglichen,
- das Maximum wird mit einem fünften vorgebbaren Schwellwert verglichen und
- abhängig von den Vergleichen des ersten Wertes mit dem ersten vorgebbaren Schwellwert, des zweiten Wertes mit dem zweiten vorgebbaren Schwellwert und des Maximums mit dem fünften vorgebbaren Schwellwert wird das eine Blindheit anzeigende Zustandsbit zurückgesetzt.

9. Verfahren zur Zustandserkennung eines an einem Kraftfahrzeug (31) angeordneten Abstandssensors (1) mit einem Prozessor (10) und einem Speicher (11) zur Abspeicherung von einem fünften Wert, der eine Zeitdauer ab ersten Vergleichen des ersten Wertes mit dem ersten vorgebbaren Schwellwert, des zweiten Wertes mit dem zweiten vorgebbaren Schwellwert und des Maximums mit dem fünften vorgebbaren Schwellwert repräsentiert, nach Anspruch 8, mit folgenden Verfahrensschritten:
- der erste Wert, der zweite Wert und das Maximum werden zyklisch aktualisiert,
- die Vergleiche des ersten Wertes mit dem ersten vorgebbaren Schwellwert, des zweiten Wertes mit dem zweiten vorgebbaren Schwellwert und des Maximums mit dem fünften vorgebbaren Schwellwert werden zyklisch wiederholt,
- der fünfte Wert, der eine Zeitdauer ab den ersten Vergleichen des ersten Wertes mit dem ersten vorgebbaren Schwellwert, des zweiten Wertes mit dem zweiten vorgebbaren Schwellwert und des Maximums mit dem fünften vorgebbaren Schwellwert repräsentiert, wird abhängig der ersten Vergleiche und nachfolgender Vergleiche des ersten Wertes mit dem ersten vorgebbaren Schwellwert, des zweiten Wertes mit dem zweiten vorgebbaren Schwellwert und des Maximums mit dem fünften vorgebbaren Schwellwert zyklisch erhöht,
- der zyklisch erhöhte fünfte Wert, der eine Zeitdauer ab den ersten Vergleichen des ersten Wertes mit dem ersten vorgebbaren Schwellwert, des zweiten Wertes mit dem zweiten vorgebbaren Schwellwert und des Maximums mit dem fünften vorgebbaren Schwellwert repräsentiert, wird mit einem sechsten vorgebbaren Schwellwert verglichen und
- abhängig von dem Vergleich des zyklisch erhöhten fünften Wertes mit dem sechsten vorgebbaren Schwellwert wird das eine Blindheit anzeigende Zustandsbit zurückgesetzt.

10. Verfahren nach einem oder mehreren der vorhergehenden Ansprüche 1 - 7, **gekennzeichnet durch** folgenden Verfahrensschritt:
- abhängig von einem ermittelten Regelobjekt wird das eine Blindheit anzeigende Zustandsbit zurückgesetzt.

11. Vorrichtung zur Zustandserkennung eines an einem Kraftfahrzeug (31) angeordneten Abstandssensors (1) mit einem Prozessor (10) und einem Speicher (11) zur Abspeicherung von einem ersten Wert, der eine Anzahl aller von dem Abstandssensor (1) während einer Messung detektierten Objekte (32) repräsentiert und normiert ist, von einem zweiten Wert, der eine mittlere Leistung von dem Abstandssensor (1) empfangenen Signalen repräsentiert und normiert ist und von dritten Werten, die eine Wahrscheinlichkeit für ein Vorhandensein von Objekten (32) innerhalb eines Erfassungsbereiches (34) des Abstandssensors (1) repräsentieren, und einen Geschwindigkeitsregler (13), mittels dessen die Geschwindigkeit des Kraftfahrzeugs (31) regelbar ist, **dadurch gekennzeichnet, dass** aus dritten Werten, die eine Wahrscheinlichkeit für ein Vorhandensein von Objekten (32) innerhalb eines vorgebbaren Erfassungsteilbereiches (39) des Abstandssensors (1) repräsentieren, mittels des Prozessors (10) ein Maximum ermittelt wird, wobei für jedes Objekt (32) eine Objekt-Existenzwahrscheinlichkeit berechnet, jede Objekt-Existenzwahrscheinlichkeit auf 1 normiert, aus allen normierten Objekt-Existenzwahrscheinlichkeiten aller erfassten Objekte (32) das Maximum ermittelt wird und wobei das Maximum asynchron so zeitgefiltert ist, dass die Existenzwahrscheinlichkeit schnell von 0 auf 1 steigt, aber langsam von 1 auf 0 sinkt, der erste Wert mittels des Prozessors (10) mit einem ersten vorgebbaren Schwellwert, der zweite Wert mittels des Prozessors (10) mit einem zweiten vorgebbaren Schwellwert, das asynchron zeitgefilterte Maximum mittels des Prozessors (10) mit einem dritten vorgebbaren Schwellwert verglichen und abhängig von den Vergleichen mittels des Prozessors (10) ein eine Blindheit anzeigendes Zustandsbit dann gesetz wird, wenn der erste und der zweite normierte Wert oberhalb des ersten bzw. des zweiten Schwellwertes und das asynchron zeitgefilterte Maximum unterhalb des dritten Schwellwertes liegen.

## Claims

1. Method for identifying the state of a distance sensor (1) arranged on a motor vehicle (31), with the aid of a processor (10) and a memory (11) for the storage of a first value, which represents a number of all the objects (32) detected by the distance sensor (1) during a measurement and is normalized, of a second value, which represents an average power of signals received by the distance sensor (1) and is normalized, and of third values, which represent a probability of the presence of objects (32) within a detection range (34) of the distance sensor (1), and with the aid of a speed controller (13) by means of which the speed of the motor vehicle (31) can be controlled, having the following method steps:
- a maximum is determined from the third values, which represent a probability of the presence of objects (32) within a prescribable detection subrange (39) of the distance sensor (1), an object existence probability being calculated for each object (32), each object existence probability being normalized to 1, the maximum of all the normalized object existence probabilities of all the detected objects (32) being determined, and the maximum being asynchronously time filtered such that the existence probability rises quickly from 0 to 1, but drops slowly from 1 to 0,
- the first value is compared with a first prescribable threshold value,
- the second value is compared with a second prescribable threshold value,
- the asynchronously time-filtered maximum is compared with a third prescribable threshold value, and
- as a function of the comparison, a state bit indicating blindness is set whenever the first and the second normalized values lie above the first or the second threshold value and the asynchronously time-filtered maximum lies below the third threshold value.

2. Method according to Claim 1 for identifying the state of a distance sensor (1) arranged on a motor vehicle (31) with aid of a processor (10) and a memory (11) for the storage of a fourth value, which represents a period from a first comparison of the first value, of the second value and of the maximum with the first three prescribable threshold values, and having the following further method steps:
- the first value, the second value and the maximum are updated cyclically,
- the comparisons of the first value, of the second value and of the maximum are repeated cyclically with the first three prescribable threshold values,
- the fourth value, which represents a period from the first comparison of the first value, of the second value and of the maximum with the first three prescribable threshold values, is increased cyclically as a function of the first comparisons and subsequent comparisons of the first value, of the second value and of the maximum with the first three prescribable threshold values,
- the cyclically increased fourth value, which represents a period from the first comparison of the first value, of the second value and of the maximum with the first three prescribable threshold values, is compared with a fourth prescribable threshold value, and
- a state bit indicating blindness is set as a function of the comparison of the cyclically increased fourth value with the fourth prescribable threshold value.

3. Method according to Claim 1 and/or 2, **characterized by** the following method step:
- the state bit indicating blindness is set additionally as a function of lens heating (21) which is switched on.

4. Method according to Claims 1, 2 and/or 3, **characterized by** the following method step:
- the state bit indicating blindness is set additionally as a function of a speed of the motor vehicle (31).

5. Method according to Claim 1, **characterized in that** the prescribable detection subrange (39) lies at a distance of between 60 and 300 metres, advantageously between 80 and 250 metres, particularly at a distance of between 100 and 200 metres from the controlled motor vehicle.

6. Method according to one or more of the preceding Claims 1-5, **characterized by** the following method step:
- a display device is operated as a function of the state bit indicating blindness.

7. Method according to one or more of the preceding claims 1-6, **characterized by** the following method step:
- the speed controller (13) is operated as a function of the state bit indicating blindness.

8. Method according to one or more of the preceding claims 1-7, having the following method steps:
- the first value is compared with the first prescribable threshold value,
- the second value is compared with the second prescribable threshold value,
- the maximum is compared with a fifth prescribable threshold value, and
- the state bit indicating blindness is reset as a function of the comparison of the first value with the first prescribable threshold value, of the second value with the second prescribable threshold value, and of the maximum with the fifth prescribable threshold value.

9. Method according to Claim 8 for identifying the state of a distance sensor (1) arranged on a motor vehicle (31) with the aid of a processor (10) and a memory (11) for the storage of a fifth value, which represents a period from the first comparison of the first value with the first prescribable threshold value, of the second value with the second prescribable threshold value, and of the maximum with the fifth prescribable threshold value, having the following method steps:
- the first value, the second value and the maximum are updated cyclically,
- the comparisons of the first value with the first prescribable threshold value, of the second value with the second prescribable threshold value, and of the maximum with the fifth prescribable threshold value are repeated cyclically,
- the fifth value, which represents a period from the first comparison of the first value with the first prescribable threshold value, of the second value with the second prescribable threshold value, and of the maximum with the fifth prescribable threshold value, is increased cyclically as a function of the first comparisons and subsequent comparisons of the first value with the first prescribable threshold value, of the second value with the second prescribable threshold value, and of the maximum with the fifth prescribable threshold value,
- the cyclically increased fifth value, which represents a period from the first comparison of the first value with the first prescribable threshold value, of the second value with the second prescribable threshold value, and of the maximum with the fifth prescribable threshold value, is compared with a sixth prescribable threshold value, and
- the state bit indicating blindness is reset as a function of the comparison of the cyclically increased fifth value with the sixth prescribable threshold value.

10. Method according to one or more of the preceding claims 1-7, **characterized by** the following method step:
- the state bit indicating blindness is reset as a function of a determined control object.

11. Device for identifying the state of a distance sensor (1) arranged on a motor vehicle (31), with the aid of a processor (10) and a memory (11) for the storage of a first value, which represents a number of all the objects (32) detected by the distance sensor (1) during a measurement and is normalized, of a second value, which represents an average power of signals received by the distance sensor (1) and is normalized, and of third values, which represent a probability of the presence of objects (32) within a detection range (34) of the distance sensor (1), and with the aid of a speed controller (13) by means of which the speed of the motor vehicle (31) can be controlled, **characterized in that** a maximum is determined by means of the processor (10) from the third values, which represent a probability of the presence of objects (32) within a prescribable detection subrange (39) of the distance sensor (1), an object existence probability being calculated for each object (32), each object existence probability being normalized to 1, the maximum of all the normalized object existence probabilities of all the detected objects (32) being determined, and the maximum being asynchronously time filtered such that the existence probability rises quickly from 0 to 1, but drops slowly from 1 to 0, the first value is compared by means of the processor (10) with a first prescribable threshold value, the second value is compared by means of the processor (10) with a second prescribable threshold value, the asynchronously time-filtered maximum is compared by means of the processor (10) with a third prescribable threshold value, and as a function of the comparison, a state bit indicating blindness is set by means of the processor (10) whenever the first and the second normalized values lie above the first or the second threshold value and the asynchronously time-filtered maximum lies below the third threshold value.

## Revendications

1. Procédé de détection de l'état d'une sonde de distance (1) disposée sur un véhicule automobile (31) et qui présente
un processeur (10) et une mémoire (11) qui conserve une première valeur qui représente un nombre de tous les objets (32) détectés par la sonde de distance (1) pendant une mesure et qui est normée, une deuxième valeur qui représente la puissance moyenne des signaux reçus en provenance de la sonde de distance (1) et qui est normée et des troisièmes valeurs qui représentent la probabilité de la présence d'objets (32) à l'intérieur de la portée de détection (34) de la sonde de distance (1),
ainsi qu'un régulateur de vitesse (13) au moyen duquel la vitesse du véhicule automobile (31) peut être régulée,
le procédé comprenant les étapes suivantes :
- un maximum est déterminé à partir des troisièmes valeurs qui représentent la probabilité de la présence d'objets (32) à l'intérieur d'une portée partielle prédéterminée (39) de détection de la sonde de distance (1), une probabilité d'existence étant calculée pour chaque objet (32), chaque probabilité d'existence d'un objet étant normée à 1, le maximum étant déterminé à partir de toutes les probabilités normées d'existence de tous les objets (32) détectés et le maximum étant filtré temporellement de manière asynchrone de telle sorte que la probabilité d'existence augmente rapidement de 0 à 1 mais diminue lentement de 1 à 0,
- la première valeur est comparée à une première valeur de seuil prédéterminée,
- la deuxième valeur est comparée à une deuxième valeur de seuil prédéterminée,
- le maximum filtré temporellement de manière asynchrone est comparé à une troisième valeur de seuil prédéterminée et
- en fonction de la comparaison, un bit d'état qui indique la cécité est activé si la première et la deuxième valeur normée sont situées au-dessus de la première ou de la deuxième valeur de seuil et si le maximum filtré temporellement de manière asynchrone est situé en dessous de la troisième valeur de seuil.

2. Procédé selon la revendication 1, pour la détection de l'état d'une sonde de distance (1) disposée sur un véhicule automobile (31) et qui présente un processeur (10) et une mémoire (11) qui conserve une quatrième valeur qui représente la durée qui s'est écoulée depuis la première comparaison de la première valeur, de la deuxième valeur et du maximum aux trois premières valeurs de seuil prédéterminées, et comprenant les étapes supplémentaires suivantes :
- la première valeur, la deuxième valeur et le maximum sont actualisées cycliquement,
- les comparaisons entre la première valeur, la deuxième valeur et le maximum aux trois premières valeurs de seuil prédéterminées sont répétées cycliquement,
- la quatrième valeur qui représente la durée qui s'est écoulée depuis la première comparaison entre la première valeur, la deuxième valeur et le maximum et les trois premières valeurs de seuil prédéterminées est répétée cycliquement en fonction des premières comparaisons et des comparaisons suivantes entre la première valeur, la deuxième valeur et le maximum et les trois premières valeurs de seuil prédéterminées,
- la quatrième valeur augmentée cycliquement, qui représente la durée qui s'est écoulée depuis la première comparaison entre la première valeur, la deuxième valeur et le maximum et les trois premières valeurs de seuil prédéterminées, est comparée à une quatrième valeur de seuil prédéterminée et
- en fonction de la comparaison entre la quatrième valeur augmentée cycliquement et la quatrième valeur de seuil prédéterminée, un bit d'état qui indique la cécité est activé.

3. Procédé selon la revendication 1 et/ou la revendication 2, **caractérisé par** les étapes suivantes :
- le bit d'état qui indique la cécité est de plus activé en fonction du branchement d'un chauffage (21) de la lentille.

4. Procédé selon les revendications 1, 2 et/ou 3, **caractérisé par** les étapes suivantes :
- le bit d'état qui indique la cécité est de plus activé en fonction de la vitesse du véhicule automobile (31).

5. Procédé selon la revendication 1, **caractérisé en ce que** la portée partielle prédéterminée de détection (39) est située à une distance comprise entre 60 et 300 mètres, de manière avantageuse entre 80 et 250 mètres et en particulier à une distance comprise entre 100 et 200 mètres par rapport au véhicule automobile régulé.

6. Procédé selon l'une ou plusieurs des revendications 1 à 5 qui précèdent, **caractérisé par** les étapes suivantes :
- un dispositif d'affichage est branché en fonction du bit d'état qui indique la cécité.

7. Procédé selon l'une ou plusieurs des revendications 1 à 6 qui précèdent, **caractérisé par** les étapes suivantes :
- le régulateur de vitesse (13) est branché en fonction d'un bit d'état qui indique la cécité.

8. Procédé selon l'une ou plusieurs des revendications 1 à 7 qui précèdent, et présentant les étapes suivantes :
- la première valeur est comparée à la première valeur de seuil prédéterminée,
- la deuxième valeur est comparée à la deuxième valeur de seuil prédéterminée,
- le maximum est comparé à une cinquième valeur prédéterminée et
- en fonction de la comparaison entre la première valeur et la première valeur de seuil prédéterminée, entre la deuxième valeur et la deuxième valeur de seuil prédéterminée et entre le maximum et la cinquième valeur de seuil prédéterminée, un bit d'état qui indique la cécité est désactivé.

9. Procédé selon la revendication 8, pour la détection de l'état d'une sonde de distance (1) disposée sur un véhicule automobile (31) et qui présente un processeur (10) et une mémoire (11) qui conserve une cinquième valeur qui représente la durée qui s'est écoulée depuis la première comparaison entre la première valeur et la première valeur de seuil prédéterminée, entre la deuxième valeur et la deuxième valeur prédéterminée et entre le maximum et la cinquième valeur de seuil prédéterminée, et comprenant les étapes suivantes :
- la première valeur, la deuxième valeur et le maximum sont actualisés cycliquement,
- les comparaisons entre la première valeur et la première valeur de seuil prédéterminée, entre la deuxième valeur et la deuxième valeur de seuil prédéterminée et entre le maximum et la cinquième valeur de seuil prédéterminée sont répétées cycliquement,
- la cinquième valeur qui représente la durée qui s'est écoulée depuis la première comparaison entre la première valeur et la première valeur de seuil prédéterminée, entre la deuxième valeur et la deuxième valeur de seuil prédéterminée et entre le maximum et la cinquième valeur de seuil prédéterminée est augmentée cycliquement en fonction de la première comparaison et des comparaisons suivantes entre la première valeur et la première valeur de seuil prédéterminée, entre la deuxième valeur et la deuxième valeur de seuil prédéterminée et entre le maximum et la cinquième valeur de seuil prédéterminée,
- la cinquième valeur augmentée cycliquement, qui représente la durée qui s'est écoulée depuis la première comparaison entre la première valeur et la première valeur de seuil prédéterminée, entre la deuxième valeur et la deuxième valeur prédéterminée, entre le maximum et la cinquième valeur de seuil prédéterminée, est comparée à une sixième valeur de seuil prédéterminée et
- en fonction de la comparaison entre la cinquième valeur augmentée cycliquement et la sixième valeur de seuil prédéterminée, un bit d'état qui indique la cécité est désactivé.

10. Procédé selon l'une ou plusieurs des revendications 1 à 7 qui précèdent, **caractérisé par** l'étape suivante :
- le bit d'état qui indique la cécité est désactivé en fonction d'un objet de régulation déterminé.

11. Dispositif de détection de l'état d'une sonde de distance (1) disposée sur un véhicule automobile (31) et qui présente
un processeur (10) et une mémoire (11) qui conserve une première valeur qui représente un nombre de tous les objets (32) détectés par la sonde de distance (1) pendant une mesure et qui est normée, une deuxième valeur qui représente la puissance moyenne des signaux reçus en provenance de la sonde de distance (1) et qui est normée et des troisièmes valeurs qui représentent la probabilité de la présence d'objets (32) à l'intérieur de la portée de détection (34) de la sonde de distance (1),
ainsi qu'un régulateur de vitesse (13) au moyen duquel la vitesse du véhicule automobile (31) peut être régulée,
**caractérisé en ce que**
le processeur (10) détermine un maximum à partir des troisièmes valeurs qui représentent la probabilité de la présence d'objets (32) à l'intérieur d'une portée partielle prédéterminée de détection (39) de la sonde de distance (1), une probabilité d'existence étant calculée pour chaque objet (32), la probabilité d'existence de chaque objet étant normée à 1, le maximum étant déterminé à partir de toutes les probabilités normées d'existence de tous les objets (32) détectés et le maximum étant filtré temporellement de manière asynchrone de telle sorte que la probabilité d'existence augmente rapidement de 0 à 1 mais diminue lentement de 1 à 0, **en ce que** la première valeur est comparée au moyen du processeur (10) à une première valeur de seuil prédéterminée, la deuxième valeur est comparée au moyen du processeur (10) à une deuxième valeur de seuil prédéterminée, le maximum filtré temporellement de manière asynchrone est comparé au moyen du processeur (10) à une troisième valeur de seuil prédéterminée et en fonction des comparaisons réalisées au moyen du processeur (10), un bit d'état qui indique la cécité est activé si la première et la deuxième valeur normée sont situées au-dessus de la première ou de la deuxième valeur de seuil et si le maximum filtré temporellement de manière asynchrone est situé en dessous de la troisième valeur de seuil.
